(19) Europäisches Patentamt
European Patent Office
Office européen des brevets

(11) **EP 3 916 615 A1**

(12) **EUROPEAN PATENT APPLICATION**

(43) Date of publication:
**01.12.2021 Bulletin 2021/48**

(51) Int Cl.:
**G06F 40/45** (2020.01)          **G06F 40/30** (2020.01)

(21) Application number: **20206180.0**

(22) Date of filing: **06.11.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2020 DE 102020206772**

(71) Applicant: **VOLKSWAGEN AG**
**38440 Wolfsburg (DE)**

(72) Inventor: **Asgari, Ehsaneddin**
**85748 Garching bei München (DE)**

(54) **METHOD, COMPUTER PROGRAM AND APPARATUS FOR RELATING TEXT UNITS**

(57)     The present invention is related to a method, a computer program, and an apparatus for relating text units, in particular for relating text units for low-resource languages. The invention is further related to a system for text processing or language understanding, which makes use of such a method or apparatus, and to a vehicle comprising such a system. In a first step, subword sampling (10) is performed on parallel source and target sentences of a source language and a target language to generate subword representations of the source and target sentences. Then subwords are selected (11) from the space of subword representations. Finally, the selected subwords are aligned (12) to generate related text units.

FIG. 1

**Description**

The present invention is related to a method, a computer program, and an apparatus for relating text units, in particular for relating text units for low-resource languages. The invention is further related to a system for text processing or language understanding, which makes use of such a method or apparatus, and to a vehicle comprising such a system.

Annotation projection is an important area in Natural Language Processing (NLP), which aims to exploit existing linguistic resources of a certain language for creating comparable resources in other languages, usually low resource languages, using a mapping of words across languages. More precisely, annotation projection is a specific use of parallel corpora, i.e. corpora containing pairs of translated sentences from language $l_s$ to $l_t$. In annotation projection, a set of labels that is available for language $l_s$ is projected to language $l_t$ via alignment links, i.e. the mapping between words in $l_s$ and $l_t$, within a parallel corpus. The labels for $l_s$ can either be obtained through manual annotation or through an analysis module that may be available for $l_s$, but not for $l_t$. Label here can be interpreted broadly, including, e.g., part of speech labels, morphological tags and segmentation boundaries, sense labels, mood labels, event labels, syntactic analysis and coreference.

Language resource creation for low-resource languages, for the purpose of automatic text analysis, can create financial, cultural, scientific, and political value. For instance, the creation of a sentiment lexicon for a low resource language would be a great help for customer reviews analysis in big corporations having branches all over the world, where 7000 languages are spoken. Furthermore, such a resource can be used for the prediction of stock market movements from social media in a low resource setting. In addition, such resources can contribute to creating knowledge for linguists. Apart from its scientific value, such linguistic knowledge can be incorporated as well into machine learning models for natural language understanding.

The mapping between words across languages as a basis for annotation projection is automatically generated using statistical word alignment, modeled on parallel corpora. This means that given parallel corpora for a set of languages and linguistic resources for only one language, through annotation projection, resources for the other languages can be created automatically. One of the main challenges for annotation projection is that for the case of low resource languages, the corpora are often rather small. The existing IBM-based alignment models work well for high-resource settings, but they fail in the low-resource cases. The most popular dataset for low resource alignment, the Bible Parallel Corpus, contains a large number (1000+) of languages. However, these are characteristically low-resource with only around 5000 to 10000 parallel sentences per language pair.

It is an object of the present invention to provide improved solutions for reliably relating text units.

This object is achieved by a method according to claim 1, by a computer program according to claim 11, which implements this method, and by an apparatus according to claim 12. The dependent claims include advantageous further developments and improvements of the present principles as described below.

According to a first aspect, a method for relating text units comprises:

- performing subword sampling on parallel source and target sentences of a source language and a target language to generate subword representations of the source and target sentences;
- selecting subwords from the space of subword representations; and
- aligning the selected subwords to generate related text units.

Accordingly, a computer program comprises instructions, which, when executed by at least one processor, cause the at least one processor to perform the following steps for relating text units:

- performing subword sampling on parallel source and target sentences of a source language and a target language to generate subword representations of the source and target sentences;
- selecting subwords from the space of subword representations; and
- aligning the selected subwords to generate related text units.

The term "computer" has to be understood broadly. In particular, it also includes workstations, distributed system, embedded devices and other processor-based data processing devices.

The computer program code can, for example, be made available for electronic retrieval or stored on a computer-readable storage medium.

The term "text unit" may refer to any segment of text. In particular a text unit may be a root, a lemma, a subword, a word, a phrase, a sentence or the like.

According to another aspect, an apparatus for relating text units comprises:

- a sampling module configured to perform subword sampling on parallel source and target sentences of a source language and a target language to generate subword representations of the source and target sentences;

- a selecting module configured to select subwords from the space of subword representations; and
- an aligning module configured to align the selected subwords to generate related text units.

The solution according to the invention provides a framework to reliably relate linguistic units, words, or subwords, even in the absence of many parallel languages based on sampling from the space of possible subwords. To this end, subword sampling is performed on the source and target sentences. The solution according to the invention is based on the finding that the aggregation of different granularities of text for certain language pairs can help word-level alignment.

In an advantageous embodiment, subword sampling on the parallel source and target sentences is performed using Byte-Pair-Encoding. The Byte-Pair-Encoding algorithm for a certain random seed and a given vocabulary size, which is analogous to the number of character merging steps, breaks a sentence into a unique sequence of subwords. Byte-Pair-Encoding has the advantage of achieving a good balance between character-level and word-level hybrid representations. This makes it capable of managing large text corpora.

In an advantageous embodiment, an iterative Bayesian optimization framework is used for selecting subwords from the space of subword representations. Using an iterative Bayesian optimization framework allows optimizing the selection of possible subwords from the space of subword representations. The use of an iterative Bayesian optimization framework is particularly suitable for languages for which a gold-standard alignment exists.

In an advantageous embodiment, the iterative Bayesian optimization framework is configured to evaluate an early stopping condition. In the Bayesian optimization, cells from a segmentation grid representing a 2D space of possibilities for the vocabulary sizes are explored. Advantageously, this process continues only until the moment where introducing more segmentations does not improve an alignment score, setting an early stopping condition. In this way, the required processing time is reduced.

In an advantageous embodiment, the selected subwords are aligned using one of fast-align and eflomal. Both fast-align and eflomal are established methods for word-level alignment and are mostly based on IBM models, which are generative models describing how a source language sentence generates a target language sentence using alignment latent variables. These models use an expectation maximization algorithm to train the alignment and only require sentence-aligned parallel corpora. Applying the subword sampling approach to these methods consistently improves the alignment results.

In an advantageous embodiment, the source and target sentences of the source language and the target language are part of a low-resource parallel corpus, which may comprise between 5.000 and 10.000 parallel sentences. The described solution can efficiently be used to improve the creation of linguistic resources for low-resource languages, where only a few thousand parallel sentences are available.

In an advantageous embodiment, hyperparameters learned by Bayesian optimization for a low-resource parallel corpus of a language pair are further applied to other languages. It has been found that the hyperparameters learned for certain language pairs can fruitfully be used for other language pairs. By applying these hyperparameters to other languages, the alignment results are consistently improved without a need supervision.

In an advantageous embodiment, hyperparameters learned by Bayesian optimization for a low-resource parallel corpus of a language pair are further applied to a mid-resource parallel corpus. It has been found that the hyperparameters learned for a low-resource parallel corpus of a language pair can also be used for a mid-resource setting, i.e. text corpora comprising 50.000 to 600.000 parallel sentences. Also in this case improvements of the alignments can be observed.

Advantageously, the related text units are used for annotation projection or the creation of language resources, e.g. for the purpose of automatic text analysis. For instance, the creation of a sentiment lexicon for a low resource language would be a great help for customer reviews analysis. Furthermore, such a resource can be used for the prediction of stock market movements from social media in a low resource setting.

Advantageously, a system for text processing or language understanding comprises an apparatus according to the invention or is configured to perform a method according to the invention for relating text units. Such a system may preferably be used in an autonomous or semi-autonomous vehicle. The vehicle may be any type of vehicle, e.g. a car, a bus, a motorcycle, a commercial vehicle, in particular a truck, an agricultural machinery, a construction machinery, a rail vehicle, etc. More generally, the invention can be used in land vehicles, rail vehicles, watercrafts, and aircrafts.

Further features of the present invention will become apparent from the following description and the appended claims in conjunction with the figures.

Fig. 1   schematically illustrates a method for relating text units;

Fig. 2   schematically illustrates a first embodiment of an apparatus for relating text units;

Fig. 3   schematically illustrates a second embodiment of an apparatus for relating text units;

Fig. 4    shows an example of English Byte-Pair-Encoding on a collection of 10.000 sentences;

Fig. 5    shows an example of the space $\Phi_{pq}$ for English and German and the cells selected by Bayesian optimization; and

Fig. 6    shows a block diagram of an electronics system of a vehicle.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

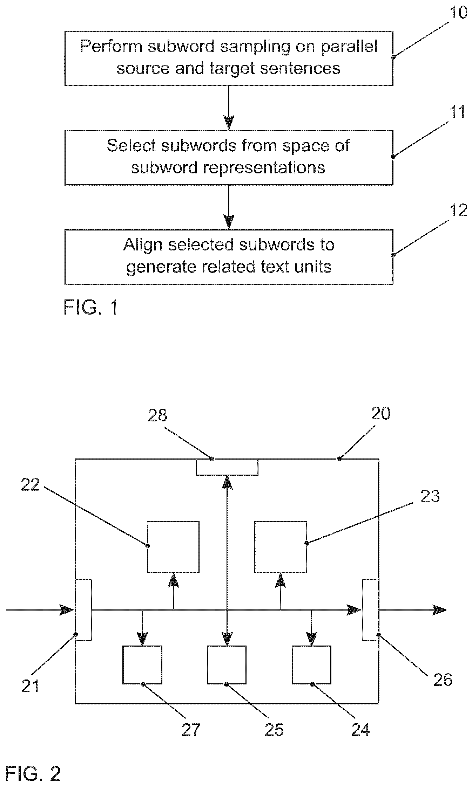

Fig. 1 schematically illustrates a method according to the invention for relating text units, in particular text units of a low-resource parallel corpus comprising between 5.000 and 10.000 parallel sentences. The related text units may, for example, be used for annotation projection or the creation of language resources. In a first step, subword sampling 10 is performed on parallel source and target sentences of a source language and a target language to generate subword representations of the source and target sentences, e.g. using Byte-Pair-Encoding. Then subwords are selected 11 from the space of subword representations. For this purpose, an iterative Bayesian optimization framework may be used. Advantageously, this iterative Bayesian optimization framework is configured to evaluate an early stopping condition. Finally, the selected subwords are aligned 12 to generate related text units, e.g. using fast-align or eflomal. Advantageously, hyperparameters learned for a low-resource parallel corpus of a language pair are further applied to other languages or to a mid-resource parallel corpus.

Fig. 2 schematically illustrates a block diagram of a first embodiment of an apparatus 20 according to the invention for relating text units. The apparatus 20 has an input 21 for receiving data, e.g. a low-resource parallel corpus comprising between 5.000 and 10.000 parallel sentences. A sampling module 22 is configured to perform subword sampling on parallel source and target sentences of a source language and a target language to generate subword representations of the source and target sentences, e.g. using Byte-Pair-Encoding. A selecting module 23 is configured to select subwords from the space of subword representations. For this purpose, the selecting module 23 may use an iterative Bayesian optimization framework. Advantageously, this iterative Bayesian optimization framework is configured to evaluate an early stopping condition. The apparatus 20 further has an aligning module 24 configured to align the selected subwords to generate related text units, e.g. using fast-align or eflomal. The related text units may be made available via an output 26, e.g. for use in annotation projection or the creation of language resources. The output 26 may also be combined with the input 21 into a single bidirectional interface. A local storage unit 27 may be provided, e.g. for storing data during processing. Advantageously, hyperparameters learned for a low-resource parallel corpus of a language pair are further applied to other languages or to a mid-resource parallel corpus.

The sampling module 22, the selecting module 23, and the aligning module 24 may be controlled by a controller 25. A user interface 28 may be provided for enabling a user to modify settings of the sampling module 22, the selecting module 23, the aligning module 24, or the controller 25. The sampling module 22, the selecting module 23, the aligning module 24, and the controller 25 can be embodied as dedicated hardware units. Of course, they may likewise be fully or partially combined into a single unit or implemented as software running on a processor, e.g. a CPU or a GPU.

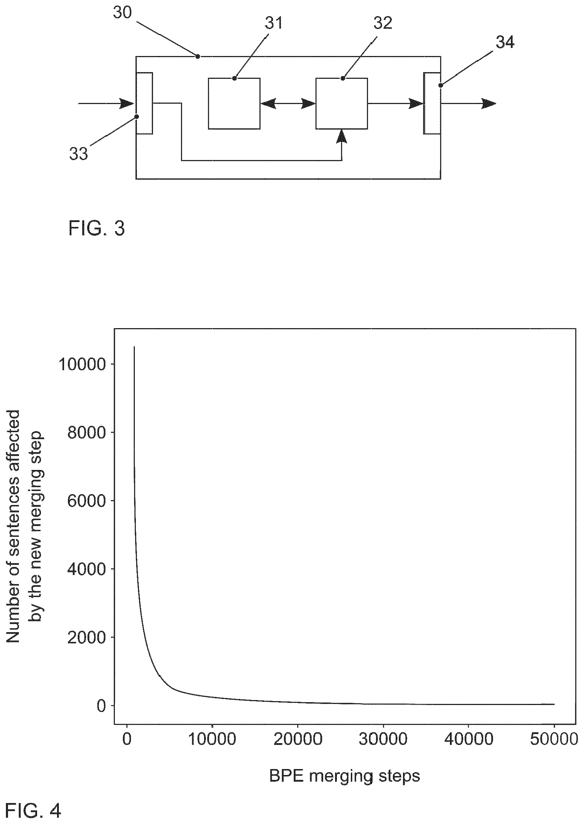

A block diagram of a second embodiment of an apparatus 30 according to the invention for detecting a semantic change of a word between domains is illustrated in Fig. 3. The apparatus 30 comprises a processing device 31 and a memory device 32. For example, the apparatus 30 may be a computer, an electronic control unit or an embedded system. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 35. The input 33 and the output 34 may be combined into a single bidirectional interface.

The processing device 31 as used herein may include one or more processing units, such as microprocessors, digital signal processors, or a combination thereof.

The local storage unit 27 and the memory device 32 may include volatile and/or non-volatile memory regions and storage devices such as hard disk drives, optical drives, and/or solid-state memories.

In the following, a preferred embodiment of the invention shall be explained in more detail with reference to Fig. 4 to Fig. 6.

For splitting text into subwords, Byte-Pair-Encoding (BPE) is used. The BPE algorithm for a certain random seed and a given vocabulary size, which is analogous to the number of character merging steps, breaks a sentence into a unique sequence of subwords. Continuing the merging steps would result in the enlargement of the subwords and, consequently, result in a smaller number of tokens.

Hypothesis: $\text{Let } S_{pq} = \bigcup_{j=1}^{N}\left(s_p^{(j)}, s_q^{(j)}\right)$ be a collection of $N$ parallel paired sentences in the language pair $l_p$ and $l_q$. It is assumed that for a certain $S_{pq}$ there exists an optimal segmentation scheme constructed by accumulation of different granularities of $(l_p, l_q)$, $\xi^*$, among all possible segmentation schemes ($\xi$), which depends on the morphological structures of this language pair.

The space of possible segmentations of a sentence $s$, denoted as $\Phi_l(s)$ for language $l$, is created by variations in the segmentation, by varying the number of merging steps.

In this notation $\Phi_l(s) = \bigcup_{i=1}^{M_l}\Phi_l^{(i)}(s)$, where $\Phi_l^{(k)}(s)$ refers to a specific vocabulary size selection for the segmentation of $s$ considering the first k merging steps in the BPE algorithm for language $l$. $M_l$ is the maximum number of merging steps in $l$. The set $\Phi_{pq}$ of all possible segmentation pairs in the language pair $l_p$ and $l_q$ is defined as:

$$\Phi_{pq} = \bigcup_{i=1}^{M_{l1}}\Phi_p^{(i)} \times \bigcup_{i=1}^{M_{l2}}\Phi_q^{(i)}. \qquad (1)$$

When dealing with a single language, to explore the possible segmentations, Monte Carlo sampling from $\Phi_l$ can be used to have different views on the segmentation, where the likelihood of certain segmentation $\Phi_l^{(k)}$ is proportional to the number of sentences affected in the corpus by introducing the $k$-th merging step. However, in the alignment problem one deals with a 2D space of possibilities for the vocabulary sizes ($\approx$ the number of merging steps in BPE) of $l_p$ and $l_q$, which can be represented as a grid. The inclusion of each cell in this grid introduces new instances to the parallel corpus, potentially transferring a low-resource setting to a high-or-mid resource setting. In this high resource setting, the subwords of a certain sentence are assigned in $T$ ways, where $T$ is the number of cells selected from the $\Phi_{pq}$ grid. Finally, to confirm an alignment link at word-level, a threshold $\lambda$ is set. The threshold $\lambda$ is the minimum ratio of subword segmentations required to confirm a word alignment link. Note that not necessarily all cells of the grid improve the alignment. Therefore, it is desirable to have a strategy to pick a subset of cells $\xi^* \subset \Phi_{pq}$ maximizing the ultimate alignment score. Having language pairs with ground-truth alignment, this problem can be solved via hyperparameter optimization using Bayesian optimization.

To maximize the alignment score for the known links, i.e. the ground-truth, at the word-level, the aim is to find for $\xi^*$ a set of cells in the $\Phi_{pq}$ grid, and their corresponding thresholds $\lambda^*$, which satisfy the following equation:

$$\xi^*, \lambda^* = \underset{\xi_i, 0 \leq \lambda \leq 1; i \in \{1,2,\dots,T\}}{\operatorname{argmin}} -f\left(\Phi_{pq}, S_{pq}, \mathbf{y_{pq}}\right), \qquad (2)$$

where $f$ refers to the alignment $F_1$ score based on ground-truth, which its underlying alignment model does not have any closed form nor gradient. $\mathbf{y_{pq}}$ is the ground-truth available for the language pair $l_p$ and $l_q$, and $S_{pq}$ refers to the parallel sentences that are going to be segmented in $T$ different schemes corresponding to $T$ cells from the $\Phi_{pq}$ grid, with $0 < i \leq T$. These $T$ cells can be selected in any order. However, to reduce the search space a sequential greedy selection of the segmentations $(\xi_i, \lambda)$ can be used. Each individual step is then solved in a Bayesian optimization framework. The iterative process is detailed in the following Algorithm 1 for iterative subword sampling:

**Result:** graph $G$ of word-aligned sentence pairs

$f1_{prev} = 0;\ i = 0;$

$\xi = \langle \text{empty} \rangle;$ % history of selected cells

$\lambda = \langle \text{empty} \rangle;$ % history of selected $\lambda$'s

$\delta = +\infty;\ E = $ early-stopping parameter;

**while** $\exists \delta > 0$ in the last $E$ iterations **do**

$\quad \xi_i, \lambda = \underset{\xi_i, \lambda}{\operatorname{argmin}} -f\left(\Phi_{pq}, S, \mathbf{y}, \xi, \lambda\right);$

$\quad \xi.\text{push}(\xi_i);$

$\quad \lambda.\text{push}(\lambda);$

$\quad f1^* = f(S, \mathbf{y}, \xi, \lambda);$

$\quad \delta = f1^* - f1_{prev};$

$\quad f1_{prev} = f1^*;$

$\quad i = i + 1;$

**end**

$G = $ alignment(segment($S, \xi, \lambda$))

$$\xi_i, \lambda = \underset{\xi_i, \lambda}{\operatorname{argmin}} -f\left(\Phi_{pq}, S_{pq}, \mathbf{y_{pq}}, \xi_{0;i-1}\right),$$

The core computation of this algorithm is $\qquad\qquad$ for which the selected vocabulary sizes up to the current iteration ($\xi_{0;i-1}$) are used for segmentation and the measurement of the alignment score. Bayesian optimization is performed to find the next optimal values for $\xi_i$ and $\lambda$. As discussed above, in the Bayesian optimization the cells from the grid of $\Phi_{pq}$ are explored using logarithmic priors for each of $\Phi_p$ and $\Phi_q$. This process is continued until the moment where introducing more segmentations does not improve the alignment score, setting an early stopping condition.

Fig. 4 shows how many sentences are affected when a new merging step are introduced, i.e. when the vocabulary size is increased by one, and demonstrates the intuition behind the use of logarithmic priors. Basis for this figure is English BPE on a collection of 10.000 sentences. This can serve as an approximation for the relative likelihood of including a merging step, which is analogous to introducing a new subword.

After training how to choose $\xi^*, \lambda^*$ for a given language pair, the same vocabulary settings may be applied to new language pairs.

The main motivation of subword sampling alignment is for a low-resource scenario. For a low-resource scenario, the language itself is not necessarily a low-resource language, but the number of sentence pairs is relatively low, e.g., less than 10.000. In addition to the low-resource alignment, the approach may be used in mid-resource scenarios as well, having less than one million sentence pairs.

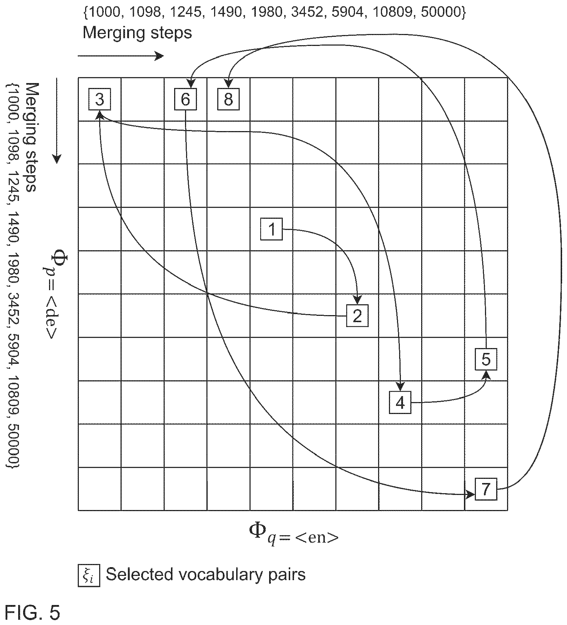

Fig. 5 shows a 2D representation of selected cells and an order of selection by Bayesian optimization to find $\xi^*$ for an example space $\Phi_{pq}$ that is explored. In this case the example space is an English-German corpus. The inclusion of the new segmentation in each iteration consistently improves the alignment scores in the next iteration.

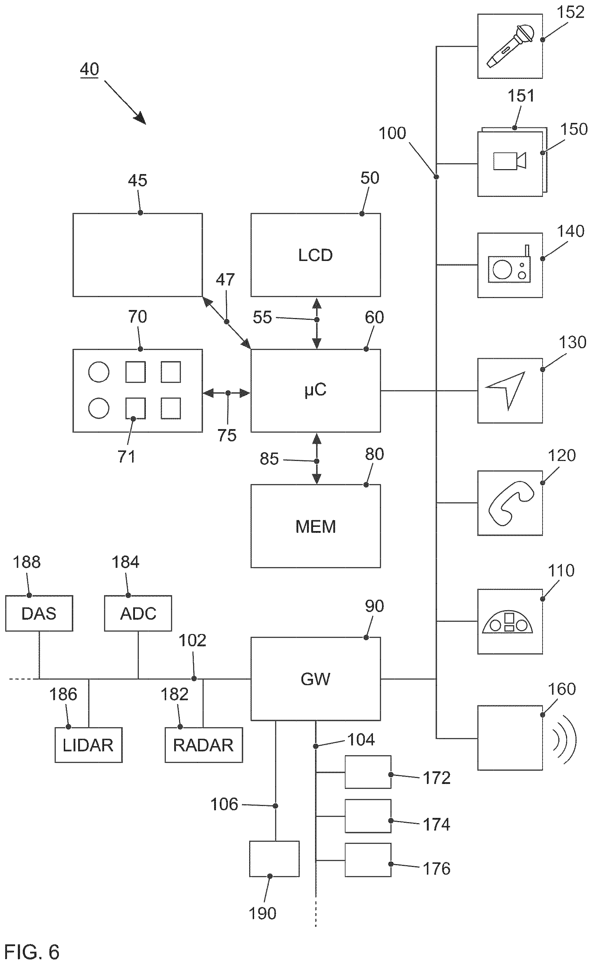

Fig. 6 schematically shows a block diagram of a board electronics system of a vehicle 40, which is suitable for use with a solution for relating text units. Part of the board electronics system is an infotainment system, which comprises a system 45 for text processing or language understanding, a touch-sensitive display unit 50, a computing device 60, an input unit 70, and a memory device 80. The system 45 is connected to the computing device 60 via a data line 47 and may include an apparatus for relating text units. Alternatively, the system may receive data about related text units from a backend remote from the vehicle 40. The display unit 50 is connected to the computing device 60 via a data line 55 and includes both a display area for displaying variable graphical information and an operator interface (touch-sensitive layer) arranged above the display area for inputting commands by a user. The input unit 70 is connected to the computing device 60 via a data line 75. Reference numeral 71 designates a press button that allows a driver to manually request a teleoperated driving session if the vehicle is blocked and the driver wants the support of a teleoperated driving operator to find a way out of the blocking situation. There is no need for a dedicated press button 71 if other techniques for manual control are used. This includes selecting an option in a user menu displayed on the display unit 50, detecting the command with speech recognition, or using gesture control means.

The memory device 80 is connected to the computing device 60 via a data line 85. In the memory device 80, a pictogram directory and/or symbol directory is deposited with pictograms and/or symbols for possible overlays of additional information.

The other parts of the infotainment system, such as a microphone 152, a camera 150, radio 140, navigation device 130, telephone 120 and instrument cluster 110 are connected via a data bus 100 with the computing device 60. As data bus 100, the high-speed variant of the CAN (Controller Area Network) bus according to ISO standard 11898-2 may be used.

Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 160. It can be used for mobile communication, e.g. mobile communication according to the 5G standard.

Reference numeral 172 denotes an engine control unit. Reference numeral 174 denotes an ESC (electronic stability control) unit, whereas reference numeral 176 denotes a transmission control unit. The networking of such control units, all of which are allocated to the category of the drive train, typically occurs with a CAN bus 104. Since various sensors are installed in the motor vehicle and these are no longer only connected to individual control units, such sensor data are also distributed via the bus system 104 to the individual control devices.

Modern vehicles may comprise additional components, such as further sensors for scanning the surroundings, like a LIDAR sensor 186 or a RADAR sensor 182 and additional video cameras 151, e.g. a front camera, a rear camera or side cameras. Such sensors are increasingly used in vehicles for observation of the environment. Further control devices, such as an automatic driving control (ADC) unit 184, etc., may be provided in the vehicle. A plurality of further driver assistance systems (DAS) 188 may be provided. The components 182 to 188 are connected to another communication bus 102, e.g. an Ethernet-Bus due to its higher bandwidth for data transport. One Ethernet-bus adapted to the special needs of car communication is standardized in the IEEE 802.1Q specification.

Reference numeral 190 denotes an on-board diagnosis interface, which is connected to another communication bus 106.

For the purpose of exchanging relevant data via the an on-board connectivity module 160 with a backend, a gateway 90 is provided. This gateway 90 is connected to the different bus systems 100, 102, 104 and 106. The gateway 90 is adapted to convert the data it receives via one bus to the transmission format of another bus so that it can be distributed using the packets specified for the respective other bus. For forwarding this data to the outside, i.e. to the backend, the on-board connectivity module 160 is equipped with a communication interface to receive these data packets and, in turn, to convert them into the transmission format of the appropriate mobile radio standard.

**Reference numerals**

10      Perform subword sampling on parallel source and target sentences
11      Select subwords from space of subword representations

| | |
|---|---|
| 12 | Align selected subwords to generate related text units |
| 20 | Apparatus |
| 21 | Input |
| 22 | Sampling module |
| 23 | Selecting module |
| 24 | Aligning module |
| 25 | Controller |
| 26 | Output |
| 27 | Local storage unit |
| 28 | User interface |
| 30 | Apparatus |
| 31 | Processing device |
| 32 | Memory device |
| 33 | Input |
| 34 | Output |
| 40 | Vehicle |
| 45 | System for text processing or language understanding |
| 47 | Data line to system |
| 50 | Display Unit |
| 55 | Data line to display unit |
| 60 | Computing device |
| 70 | Input unit |
| 71 | Press button |
| 75 | Data line to input unit |
| 80 | Memory unit |
| 85 | Data line to memory unit |
| 90 | Gateway |
| 100 | First data bus |
| 102 | Second data bus |
| 104 | Third data bus |
| 106 | Fourth data bus |
| 110 | Instrument cluster |
| 120 | Telephone |
| 130 | Navigation device |
| 140 | Radio |
| 150 | Camera |
| 151 | Further cameras |
| 152 | Microphone |
| 160 | On-board connectivity module |
| 172 | Engine control unit |
| 174 | Electronic stability control unit |
| 176 | Transmission control unit |
| 182 | RADAR sensor |
| 184 | Automatic driving control unit |
| 186 | LIDAR sensor |
| 190 | On-board diagnosis interface |

**Claims**

1. A method for relating text units, the method comprising:

   - performing subword sampling (10) on parallel source and target sentences of a source language and a target language to generate subword representations of the source and target sentences;
   - selecting (11) subwords from the space of subword representations; and
   - aligning (12) the selected subwords to generate related text units.

2. The method according to claim 1, wherein subword sampling (10) on the parallel source and target sentences is performed using Byte-Pair-Encoding.

3. The method according to claim 1 or 2, wherein an iterative Bayesian optimization framework is used for selecting (11) subwords from the space of subword representations.

4. The method according to claim 3, wherein the iterative Bayesian optimization framework is configured to evaluate an early stopping condition.

5. The method according to any of the preceding claims, wherein the selected subwords are aligned (12) using one of fast-align and eflomal.

6. The method according to any of the preceding claims, wherein the source and target sentences of the source language and the target language are part of a low-resource parallel corpus.

7. The method according to claim 6, wherein the low-resource parallel corpus comprises between 5.000 and 10.000 parallel sentences.

8. The method according to claim 6 or 7, wherein hyperparameters learned by Bayesian optimization for a low-resource parallel corpus of a language pair are further applied to other languages.

9. The method according to claim 6 or 7, wherein hyperparameters learned by Bayesian optimization for a low-resource parallel corpus of a language pair are further applied to a mid-resource parallel corpus.

10. The method according to any of the preceding claims, wherein related text units are used for annotation projection or the creation of language resources.

11. A computer program comprising instructions, which, when executed by a computer, cause the computer to perform a method according to any of claims 1 to 10 for relating text units.

12. An apparatus (20) for relating text units, the apparatus (20) comprising:

   - a sampling module (22) configured to perform subword sampling (10) on parallel source and target sentences of a source language and a target language to generate subword representations of the source and target sentences;
   - a selecting module (23) configured to select (11) subwords from the space of subword representations; and
   - an aligning module (24) configured to align (12) the selected subwords to generate related text units.

13. A system (45) for text processing or language understanding, **characterized in that** the system (45) comprises an apparatus (20) according to claim 12 or is configured to perform a method according to any of claims 1 to 10 for relating text units.

14. The system (45) according to claim 13, wherein the system (45) is configured to make use of related text units for annotation projection or the creation of language resources.

15. A vehicle (40), **characterized in that** the vehicle (40) comprises a system (45) for text processing or language understanding according to claim 13 or 14.

10

Perform subword sampling on parallel
source and target sentences

11

Select subwords from space of
subword representations

12

Align selected subwords to
generate related text units

FIG. 1

28                    20

22
                              23

21
                              26

27        25        24

FIG. 2

FIG. 3

BPE merging steps

FIG. 4

FIG. 5

FIG. 6

Europäisches
Patentamt

European
Patent Office

Office européen
des brevets

# EUROPEAN SEARCH REPORT

Application Number

EP 20 20 6180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASOUD JALILI SABET ET AL: "SimAlign: High Quality Word Alignments without Parallel Training Data using Static and Contextualized Embeddings", ARXIV.ORG, CORNELL UNIVERSITY LIBRARY, 201 OLIN LIBRARY CORNELL UNIVERSITY ITHACA, NY 14853, 19 April 2020 (2020-04-19), XP081647889, * the whole document * | 1-15 | INV. G06F40/45 G06F40/30 |
| X | STIG-ARNE GR\"ONROOS ET AL: "Transfer learning and subword sampling for asymmetric-resource one-to-many neural translation", ARXIV.ORG, CORNELL UNIVERSITY LIBRARY, 201 OLIN LIBRARY CORNELL UNIVERSITY ITHACA, NY 14853, 8 April 2020 (2020-04-08), XP081640276, * the whole document * | 1-15 | |
| A | US 2017/212890 A1 (AKBIK ALAN [DE] ET AL) 27 July 2017 (2017-07-27) * the whole document * | 1-15 | TECHNICAL FIELDS SEARCHED (IPC) G06F |
| T | EHSANEDDIN ASGARI ET AL: "Subword Sampling for Low Resource Word Alignment", ARXIV.ORG, CORNELL UNIVERSITY LIBRARY, 201 OLIN LIBRARY CORNELL UNIVERSITY ITHACA, NY 14853, 21 December 2020 (2020-12-21), XP081843862, | | |

The present search report has been drawn up for all claims

| Place of search | Date of completion of the search | Examiner |
|---|---|---|
| Berlin | 20 April 2021 | Lechenne, Laurence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 6180

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2021

| Patent document cited in search report | Publication date | Patent family member(s) | Publication date |
|---|---|---|---|
| US 2017212890 A1 | 27-07-2017 | NONE | |

EPO FORM P0459

For more details about this annex : see Official Journal of the European Patent Office, No. 12/82